# EUROPEAN PATENT APPLICATION

(11) **EP 2 432 205 A1**
(43) Date of publication of application: **21.03.2012**
(21) Application number: 09844529.9
(22) Date of filing: 07.09.2009
(51) Int. Cl.: H04M 3/42, H04W 88/18, H04L 29/08

(54) **SYSTEM AND METHOD FOR MULTIPLE ACCESS CUSTOMER SERVICE**

(30) Priority: 11.05.2009 CN 200910107258
(71) Applicant: ZTE Corporation, Shenzhen, Guangdong 518057 (CN)
(72) Inventor: ZUO, Yangmei, Shenzhen Guangdong 518057 (CN)
(74) Representative: Modiano, Micaela Nadia
(86) International application number: PCT/CN2009/073792
(87) International publication number: WO 2010/130117

(57) **Abstract**

The present invention discloses a multi-access customer service system and a method thereof. The system comprises an access module, a data parsing module, a customer service module and a service module, wherein the access module is configured to receive various kinds of request information from a terminal device and transmit the request information to the data parsing module; the data parsing module is configured to parse and identify the request information and transmit the parsed request information to the service module or the customer service module; the service module is configured to generate corresponding service information by executing service logic and transmit the service information to the terminal device; and the customer service module is configured to access a customer service agent to make the customer service agent exchange information with the terminal device. The invention is flexible, easy and convenient, with enriched service contents, enhanced integration and convenience of the customer service system; thus obviously improves the service efficiency and service quality and provides a user with a more convenient, fast and humanized service.

## Description

### Field of the Invention

The present invention relates to the field of computer communications, and in particular to a multi-access customer service system and a method thereof.

### Background of the Invention

With the rapid development of the computer communication technology and the continuous improvement of the social service level, people put forward higher and higher requirements on service efficiency, service mode and service quality of customer service systems.

In existing customer service systems, generally, a user accesses a customer service system through a terminal device by way of calling. The customer service system provides a service to the user by voice after a request of the service is sent by the user. The implementation process generally includes the following steps: 1) a user accesses a customer service system by calling; 2) for a service request which requires execution of certain service logic (such as, service customization, service query and so on), the customer service system makes it directly access a service module and executes corresponding services; 3) for a service request which does not require execution of service logic (such as, manual services, service introduction and so on), the customer service system makes it access an access customer service module according to the requirement of the user, and the customer service module connects a customer service agent to interact with the terminal device and provide a manual voice or an automatic voice service; and 4) during the service process or after the service process, the user can hang up by himself/herself and the customer service system can also hang up according to a certain control flow.

It can be seen that the service process in the existing customer service systems only support access by calling generally. In fact, with the introduction and popularization of various communication technologies, such as short message, multimedia message, video, E-mail, wireless application protocol (WAP), unstructured supplementary service data (USSD), etc., the traditional customer service systems gradually show the defect of monotonic access way, and are difficult to meet the different requirements of users on different occasions sometimes. For example, sometimes, the service program requested by a user is complex and it is necessary to provide data to the customer service system; and sometimes, the voice function of a communication terminal fails and a service can be requested only by short messages, E-mails and the like. In addition, existing customer service systems and terminal devices interact with each other mainly by voice, which is very monotonic and cannot meet different requirements of users on different occasions sometimes. For example, it is obvious that the existing interaction by voice is difficult to provide a user with a precise and fast service under the conditions of sometimes difficult identification of voice services due to a noisy communication environment, sometimes inconvenient to answer a call during a conference, sometimes service information provided by the customer service system being required and the like.

### Summary of the Invention

The present invention is provided for solving the problems of the customer service system in the prior art that the access way is monotonic and it is difficult to flexibly, precisely and fast provide a service for a customer. Therefore, the main object of the present invention is to provide a flexible, easy and convenient multi-access customer service system with good integration and a method thereof.

In order to fulfil the object, in one aspect, the invention provides a multi-access customer service system, including: an access module, a data parsing module, a customer service module and a service module, wherein the access module is configured to receive various kinds of request information from a terminal device and transmit the request information to the data parsing module; the data parsing module is configured to parse and identify the request information and transmit the parsed request information to the service module or the customer service module; the service module is configured to generate corresponding service information by executing service logic and transmit the service information to the terminal device; and the customer service module is configured to access a customer service agent to make the customer service agent exchange information with the terminal device.

The data parsing module includes a parsing unit, a classification unit and a transmission unit, wherein the parsing unit is configured to parse the request information and transmitting the parsed request information to the classification unit; the classification unit is configured to classify and identify the request information; and the transmission unit is configured to transmit the request information to the service module for processing if the execution of service logic is needed; otherwise, the transmission unit is configured to transmit the request information to the customer service module for processing.

The access module includes a receiving unit, a queue processing unit and a transmission unit, wherein the receiving unit is configured to receive the request information from the terminal device and inputting the request information into the queue processing unit; the queue processing unit is configured to array and buffer the request information; and the transmission unit is configured to transmit the request information in the queue processing unit to the data parsing module.

The access module further includes a policy configuration unit which is configured to provide the queue processing unit with at least one of the following arraying policies: a load balancing policy, a priority policy and a format selecting policy.

A data transmission module, which is configured to receive the service information generated and transmitted by the service module, encapsulate and transmit the service information to the terminal device in the process of transmitting the service information to the terminal device, is included.

The data parsing module is further configured to encapsulate the service information from the service module and transmit the encapsulated service information to the access module; and the access module is further configured to transmit the service information to the terminal device.

The access module includes a receiving unit, a queue processing unit and a transmission unit, wherein the receiving unit is configured to receive the request information from the terminal device and receive the service information from the data parsing module, and input the request information and service information into the queue processing unit respectively; the queue processing unit is configured to array and buffer the request information and service information; and the transmission unit is configured to transmit the request information and service information in the queue processing unit to the data parsing module and the terminal device respectively.

The service module is further configured to provide the terminal device with a navigation menu according to the request information.

The service module is further configured to receive the request information from the customer service module, generate the service information by executing service logic and transmit the service information to the terminal device.

The request information is at least one of calling information, multimedia message, short message, voice, video, audio, E-mail, WAP and USSD.

In order to fulfil the object, in another aspect, the invention provides a multi-access customer service method, including the following steps: A: receiving various kinds of request information from a terminal device; B: parsing and identifying the request information; and C: if the request information requires the execution of service logic, generating corresponding service information by executing service logic and transmitting the service information to a terminal device; otherwise, accessing a customer service agent to make the customer service agent exchange information with the terminal device.

In the information exchange process between the customer service agent and the terminal device, the customer service system executes the service logic to generate corresponding service information according to the request information of the terminal device and transmits the service information to the terminal device.

The multi-access customer service system of the invention supports multiple access ways, such as calling, multimedia message, short message, voice, video, audio, E-mail, WAP and USSD, and integrates the traditional calling access with the data packet access; thus can make a user enjoy the services of the customer service system on various occasions and in various states of the terminal device, and overcomes the inconvenience caused by the monotonic access way in the traditional customer service system. For example, when a user cannot hear the voice service of the customer service system clearly in a noisy environment or cannot directly make a call during a meeting, the short message or video can be started to access the customer service system to acquire a service. The invention is flexible, easy and convenient, and enhances the integration and convenience of the customer service system, which obviously improves service efficiency and service quality and provides a user with a more convenient, fast and humanized service.

In addition, the invention can also provide multiple interaction ways, such as calling, multimedia message, short message, voice, video, audio, E-mail, WAP and USSD, can provide service information to a terminal device by short message, multimedia message, video and other ways according to the requirements of a user, and can also synchronously provide service information to the user in the interaction process between the terminal device and the traditional customer service agent, thereby further enriching service contents and improving service convenience and user experience.

### Brief Description of Drawings

The drawings herein are used for further understanding of the present invention and constitute a part of the application, and the exemplary embodiments of the present invention and description thereof are used for explanation of the present invention without construing any limitation to the present invention. In the drawings:
Fig. 1 is a schematic diagram of an interaction mode between a multi-access customer service system of the first embodiment and terminal devices according to the present invention;
Fig. 2 is a structural block diagram of a data parsing module according to the embodiments of the present invention;
Fig. 3 is a schematic diagram of an interaction mode between a multi-access customer service system of the second embodiment and terminal devices according to the present invention;
Fig. 4 is a schematic diagram of an interaction mode between a multi-access customer service system of the third embodiment and terminal devices according to the present invention;
Fig. 5 is a structural block diagram of an access module according to an embodiment of the present invention;
Fig. 6 is a schematic diagram of a multi-access customer service system of the fourth embodiment of the present invention;
Fig. 7 is a general flowchart of a multi-access customer service method according to the embodiments of the present invention; and
Fig. 8 is a flowchart of detailed implementation of the multi-access customer service method of the present invention.

### Detailed Description of Embodiments

The multi-access customer service system provided by the embodiments of the invention can be implemented by the following ways and is not limited to the following ways. It should be noted that, if not conflicted, the embodiments and features thereof in the application can be combined with one another.

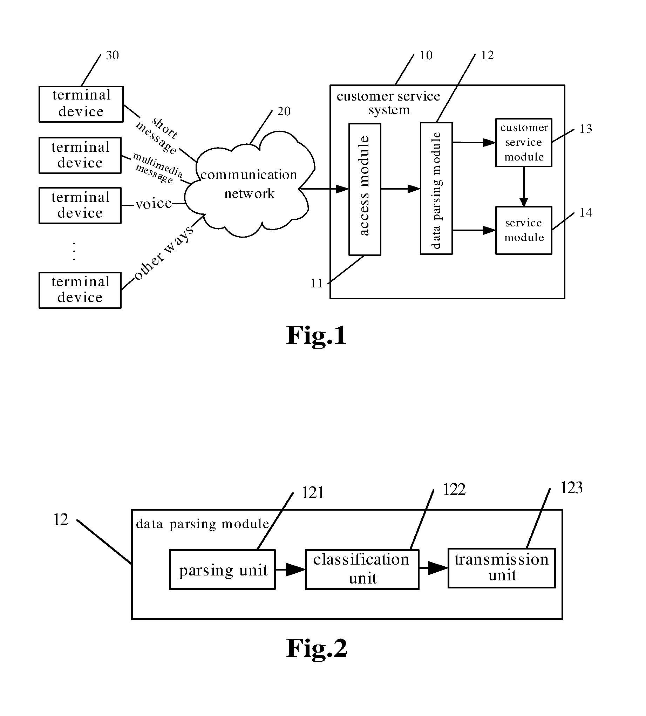

Fig. 1 is a schematic diagram of an interaction mode between a multi-access customer service system of the first embodiment and terminal devices according to the invention, where there is a customer service system 10, a communication network 20 and at least one terminal device 30. In the above, the terminal device 30 can be a mobile phone, a fixed telephone, a computer, a palm computer and the like, and the terminal device 30 can support one or more of the following communication services: calling, multimedia message, short message, voice, video, audio, E-mail, WAP, USSD and the like. The communication network 20 can be a wired network, a wireless network and the like. The customer service system 10 comprises an access module 11, a data parsing module 12, a customer service module 13 and a service module 14.

The access module 11 is configured to receive various kinds of request information, which can be traditional calling information or communication services, such as short message, multimedia message, voice and video, from the terminal device 20, and the access module 11 transmits the request information to the data parsing module 12.

The data parsing module 12 is configured to parse and identify the request information, and to transmit the parsed request information to the customer service module 13 or the service module 14. As shown in Fig. 2, the data parsing module 12 can further comprise a parsing unit 121, a classification unit 122 and a transmission unit 123. The parsing unit 121 is configured to parse the request information into information in a format supported by the customer service module 13 or by the service module 14, such as text information, picture information and audio information, and to transmit it to the classification unit 122; and the traditional calling information can be directly transmitted by the classification unit 122 and the transmission unit without being parsed. The classification unit 122 is configured to classify and identify the parsed request information; if execution of service logic is needed, the request information is transmitted to the service module 14 for processing through the transmission unit 123; otherwise, the request information 14 is transmitted to the customer service module 13 for processing through the transmission unit 123.

The service module 14 is configured to receive the request information from the data parsing module 12, the request information generally requires execution of service logic. For example, for a service query request, a positioning request and a data acquiring request, the service module 14 is configured to generate corresponding service information by executing service logic and to transmit it to the terminal device 30. Such service information can be text information, picture information, audio information and the like, and is finally encapsulated into short messages, multimedia messages, E-mails and the like, and is transmitted to the terminal device 30. The service logic is based on the processing capacity of services (including short messages, multimedia messages, voices, videos, audios, WAP, USSD, E-mails and the like), database accessing capacity, Webservice message processing capacity and other functions; these functions are organized to form a uniform service flow according to a certain rule; and when the service logic is executed, the service module 14 performs service logic definition and service logic execution on the request information according to a certain service rule. The service module 14 can also perform service emulation to generate the final service information. The service module 14 can also provide a navigation menu to the terminal device 30 according to the request information. The navigation menu provides various ways of interaction which can be freely selected by users, such as automatic voice service, manual voice service, automatic video service, manual video service, USSD service and multimedia service, so as to bring convenience to the operation by users and provide users with a more flexible, free and humanized service. Besides, the navigation menu can be a hierarchical one.

The customer service module 13 is also configured to receive the request information, which generally does not require execution of service logic, such as, manual service, automatic voice service, automatic video service and manual video service, from the data parsing module 12, and accesses a customer service agent to realize the information exchange between the customer service agent and terminal device 30. For example, a manual customer service agent or an automatic customer service agent is provided according to the requirements of users. The customer service module 13 can also perform the resonance, vibration, call notification or third-party call of a group of terminal devices 30 according to the requirements of users, in a communication network 20, specifically by video, voice and the like. The customer service system 10 of the embodiment of the invention integrates the traditional calling access and the data packet access, which is simple, convenient and flexible, and can meet the different requirements of users on various occasions, thereby obviously improving the integration and convenience of the customer service system 10.

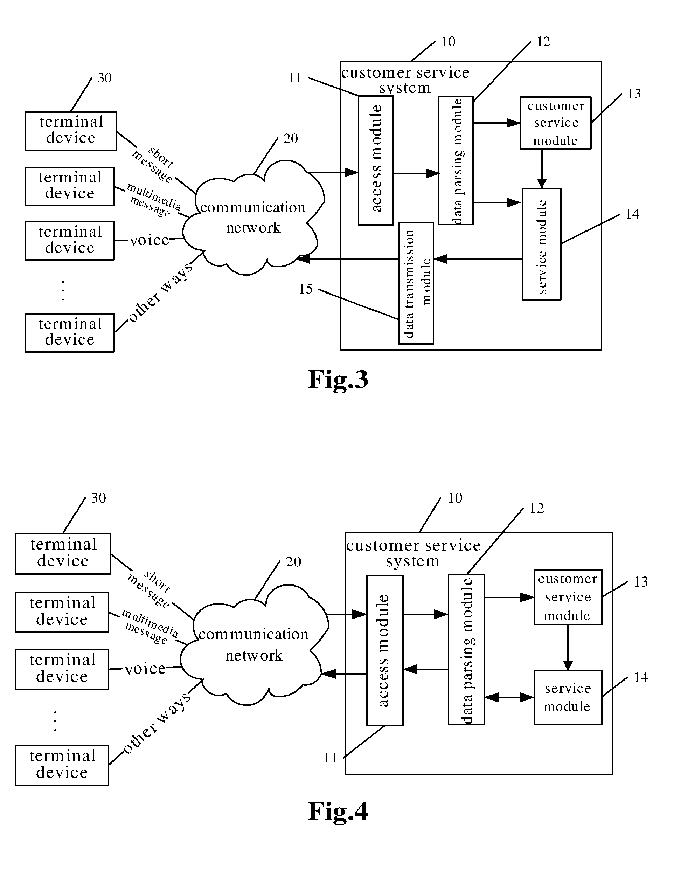

Fig. 3 is a schematic diagram of an interaction mode between a multi-access customer service system of the second embodiment and terminal devices according to the invention. In the embodiment, a data transmission module 15 is further comprised. The process of transmitting service information to a terminal 30 comprises the following steps: the service module 14 transmits the generated service information to the data transmission module 15; the data transmission module 15 encapsulates the service information and transmits it to the terminal device 30. The data transmission module can also transmit the navigation menu generated by the service module 14 to the terminal device 30.

Fig. 4 is a schematic diagram of an interaction mode between a multi-access customer service system of the third embodiment and terminal devices according to the invention. In the embodiment, the service module 14 transmits the generated service information to a terminal device 30 through the data parsing module 12 and the access module 11. The data parsing module 12 is also configured to encapsulate the service information, which is from the service module 14 and can be text information, picture information, audio information and the like into a short message, a multimedia message, an E-mail and the like, and to transmit it to the access module 11; and the access module 11 receives such service information and transmits it to the terminal device 30.

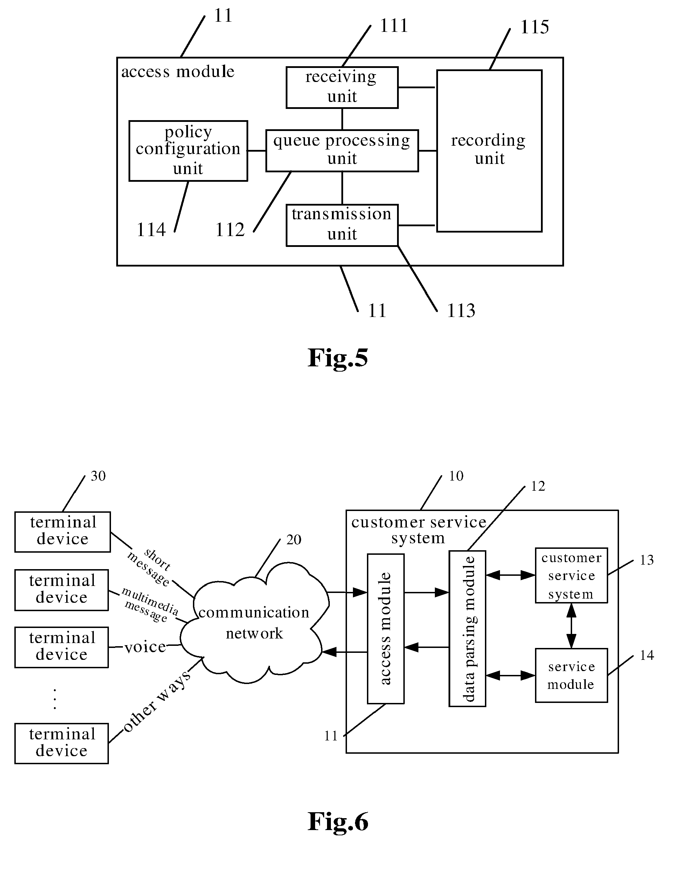

As shown in Fig. 5, the access module 11 in the first embodiment and the second embodiment of the invention can further comprise a receiving unit 111, a transmission unit 112 and a queue processing unit 113, wherein the receiving unit 111 is configured to receive request information from terminal devices 30 and input it to the queue processing unit 112 for arraying; the transmission unit 113 is configured to transmit the request information in the queue processing unit 112 to the data parsing module 12 according to a certain order; the queue processing unit 112 is configured to array the request information in categories and buffer the request information; and when the access module 11 receives multiple pieces of request information from the terminal devices 30, a group of transmission queues can be created according to a certain arraying order. For example, the request information is arrayed according to the service way of data information (including short message, multimedia message, E-mail and the like), or according to the receiving order, or the characteristics of processing data information (including the uplink and downlink of a short message or a multimedia message, voice access, video play, the push of an E-mail and the like). In the third embodiment of Fig. 4, the access module 11 not only can process the above mentioned request information, but also can classify and array the service data from the data parsing module 12, wherein the receiving unit 111 is configured to receive the request information from the terminal devices 30 and the service information from the data parsing module 12, and to input the request information and service information into the queue processing unit 112 respectively; the queue processing unit 112 is configured to array and buffer the request information and service information; and the transmission unit 113 is configured to transmit the request information in the queue processing unit 112 to the data parsing module 12 and transmit the service information to the terminal devices 30 respectively.

The access module 11 in the embodiment of the invention further comprises a policy configuration unit 114, which is configured to provide the queue processing unit 112 with various arraying policies, such as at least one of a load balancing policy, a priority policy and a format selecting policy, wherein the load balancing policy can perform load balancing processing according to identification numbers of the multiple terminal devices 30 to improve data transmission efficiency and stability; and the priority policy can form a priority processing mechanism in the request information or service information to be transmitted according to a certain rule. For example, the priority of an uplink short message or a multimedia message is set to the highest, and the priority of a delinquency notification and other information is set to the lowest. Due to the policy configuration unit 114, the function of the access module 11 is further optimized and the service efficiency and service quality of the customer service system 10 are extraordinarily improved. The access module 11 further comprises a record unit 115 which is configured to record the operation results of the receiving unit 111, transmission unit 113, queue processing unit 112 and policy configuration unit 114 respectively, so that a user or the customer service system 10 can internally query, monitor or additionally process the operation results conveniently. Due to the access module 11, there is a good interaction order between the customer service system 10 and the terminal devices 30, thereby preventing the system congestion and even the communication blockage from being caused when multiple terminal devices 30 make service requests. For example, when the customer service system 10 has reached a running status of the maximal load and a terminal device 30 makes a service request, the customer service system 10 can prompt the user to wait for or terminate the interaction, and the access module 11 keeps the session and waits for the following instruction from the terminal device 30 to perform further processing according to the running status of the system.

In the first, second and third embodiments, the service module 14 can also receive the request information from the customer service module 13, which further improves the flexibility of the customer service system 10, and makes the functions of the customer service module 13 and the service module 14 further combined with each other and optimized. For example, during the customer service module 13 connecting the customer service agent to interact with the terminal device 30, when a user makes a request for executing service logic (such as, acquiring service information or querying service contents), the customer service module 13 sends request information to the service module 14 according to the request information of the terminal device 30; and the service module 14 executes the service logic, generates corresponding service information and finally sends it to the terminal device 30. For example, Fig. 6 is a schematic diagram of a multi-access customer service system of the fourth embodiment of the invention. Similar to the third embodiment, the service module 14 is further configured to receive the request information from the customer service module 13, to generate service information by executing service logic and transmit the information by various flexible ways. The service information can be directly transmitted to the terminal devices 30 through the data transmission module 15; or can be transmitted to the customer service module 13 first, and then, be transmitted from the customer service module 13 to the terminal devices 30 through the data parsing module 12 and the access module 11; or can be transmitted to the terminal devices 30 through the data parsing module 12 and the access module 11. Therefore, the embodiment further meets the requirements of users and improves the service quality and efficiency of the customer service system 10.

In addition, the system provided in the embodiment of the invention further comprises multiple service modules 14 which can be distinguished according to service types, request information types and the like.

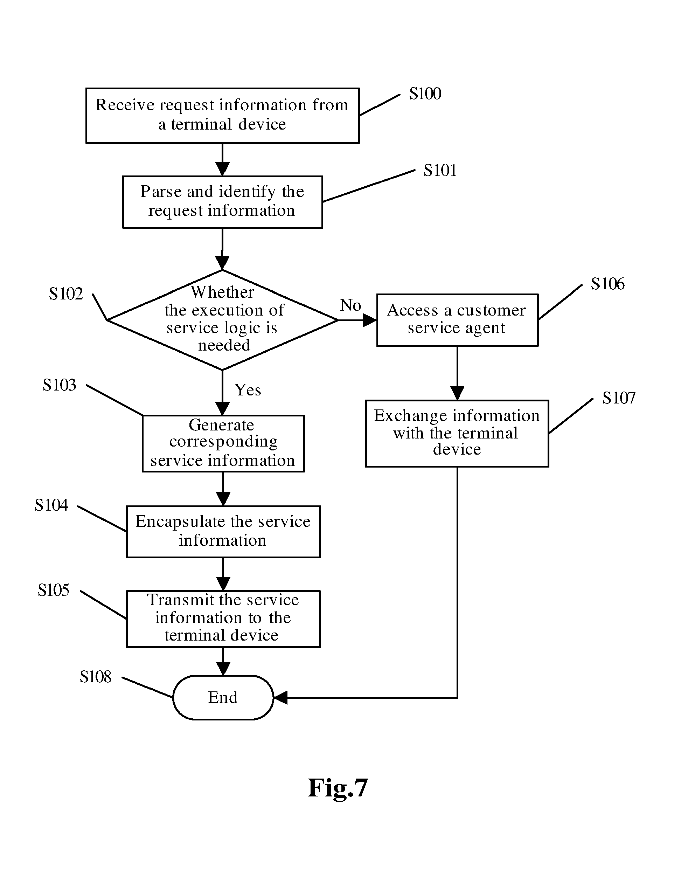

Fig. 7 is a general flowchart of a multi-access customer service method according to the embodiments of the invention, comprising the following steps.

Step S100: the access module 11 receives various kinds of request information from a terminal device 30 and transmits it to the data parsing module 12.

Step S101: the data parsing module 12 parses and identifies the request information.

Step S102: determine whether the request information requires execution of service logic. If it does, S103 is executed, otherwise, S106 is executed.

Step S103: if the request information requires execution of service logic, the data parsing module 12 transmits the request information to a service module 14 which generates corresponding service information by executing service logic and transmits the generated corresponding service information to the data parsing module 12.

Step S104: the data parsing module 12 encapsulates the service information and transmits it to the access module 11.

Step S105: the access module 11 transmits the service information to the terminal device 30. If the multi-access customer service system of the second embodiment of the invention is adopted, steps S103 to S105 can be directly completed by the data transmission module 15. And in the first embodiment, the service module 14 can transmit the service information to the terminal device 30 in other ways.

Step S106: if the request information does not require execution of service logic, the data parsing module 12 transmits the request information to the customer service module 13.

Step S107: the customer service module 13 connects a customer service agent to realize the information exchange between the customer service agent and the terminal device 30.

Step S108: the service is ended.

The multi-access customer service system of the embodiments of the invention supports multiple kinds of access, such as calling, multimedia message, short message, voice, video, audio, E-mail, WAP and USSD, which can make a user enjoy the service of the customer service system 10 on various occasions and in various status of the terminal device 30, and overcomes the inconvenience caused by the monotonic access way in the traditional customer service system 10. For example, when a user cannot hear the voice service of the customer service system 10 clearly in a noisy environment or cannot directly make a call during a meeting, the short message or video can be started to access the customer service system 10 to acquire a service. Therefore, the system in the embodiments of invention enhances the integration and convenience of the customer service system 10 and makes the operation become easy, convenient and flexible, which obviously improves the service efficiency and service quality and provides a user with a more convenient, fast and humanized service. In addition, the system can also provide multiple interaction ways, such as call, multimedia message, short message, voice, video, audio, E-mail, WAP, and USSD, which further meet the requirements of users and improve service quality.

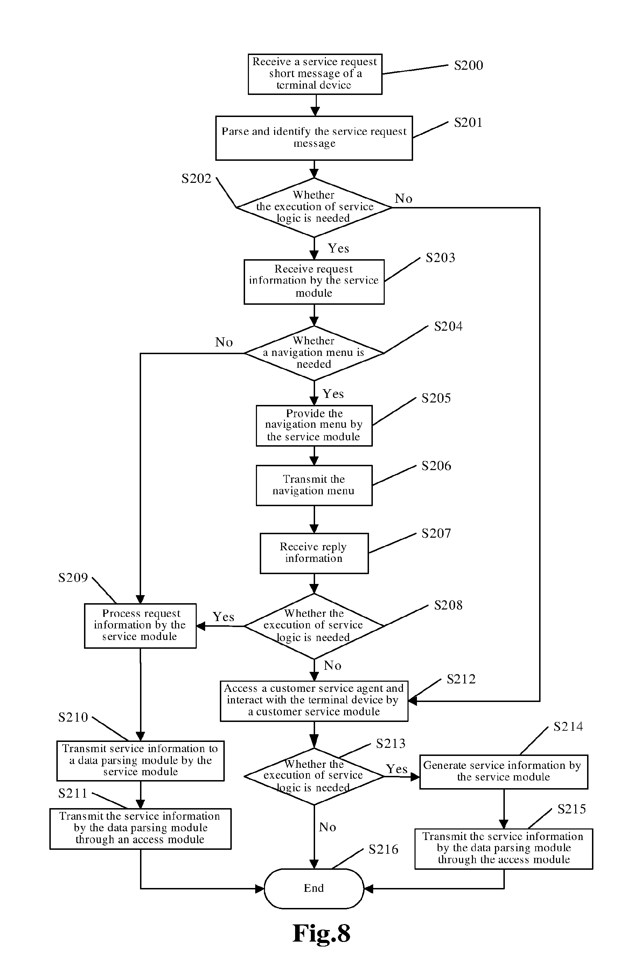

Fig. 8 is a flowchart of a multi-access customer service method of an embodiment of the invention, a terminal device 30 in the embodiment accesses the customer service system 10 through short messages; and the multi-access customer service system of the fourth embodiment of the invention is adopted, comprising the following steps.

Step S200: the access module 11 receives a service request short message, which is sent from the terminal device 30 to the data customer service system 10, and transmits it to the data parsing module 12.

Step S201: the data parsing module 12 parses the service request short message.

Step S202: the data parsing module 12 determines whether the request information requires execution of service logic. If it does, S203 is executed; otherwise, S212 is executed.

Step S203: if execution of service logic is needed, the service module 14 receives the request information.

Step S204: the service module 14 determines whether a navigation menu is needed, wherein the navigation menu can be obtained by a user request or the rule of providing the navigation menu can be set in the service module 14. If the navigation menu is needed, S205 is executed; otherwise, S209 is executed.

Step S205: the service module 14 provides a navigation menu, of which the format and contents can be set by the service module 14 according to a situation. For example, the content of the navigation menu is as follows:
please press "0#" for an automatic voice service;
   please press "1#" for a manual voice service;
   please press "2#" for an automatic video service;
   please press "3#" for a manual video service;
   please press "4#" for a USSD service;
   please press "5#" for a multimedia message service;
   please press "6#" for a short message service;
   please press "7#" for an E-mail service;
   please press "8#" for an audio service; and
   please press "9#" for a WAP service.

Step S206: the service module 14 transmits the navigation menu to the data parsing module 12, and the navigation menu is encapsulated into a navigation menu short message and transmitted to the terminal device 30 through the access module 11.

Step S207: a user sends reply information to the customer service system 10 through the terminal device 30 after receiving the navigation menu short message; and the access module 11 receives the reply information and transmits it to the data parsing module 12 For example, the user presses "1#" for a manual voice service.

Step S208: the data parsing module 12 determines whether the execution of service logic is needed according to the reply information of the user. If so, S209 is executed; otherwise, S212 is executed.
Step S209: the service module 14 receives reply information subjected to conversion and generates service information;

Step S210: the service module 14 transmits the service information to the data parsing module 12.

Step S211: the data parsing module 12 encapsulates the service information and transmits it to the terminal device 30 through the access module 11.

Step S212: if the execution of service logic is not needed, the customer service module 13 receives reply information subjected to conversion and accesses the customer service agent and the user exchanges information with the customer service agent through the terminal device 30 by voice or video.

Step S213: in the information exchange process between the user and the customer service system, whether a user makes a service request which requires the execution of service logic is determined. If so, S214 is executed; otherwise, S216 is executed.

Step S214: when the user needs to execute service logic, for example, the user makes a request for obtaining a newspaper by voice, a manual customer service agent can acquire a corresponding multimedia newspaper through other associated systems, and transmit the newspaper to the terminal device 30 through the customer service module 14, data parsing module 12 and accessing module 11; and the manual customer service agent can also transmit request information to the service module 13 which generates the service information by executing service logic and transmits it to the data parsing module 12.

Step S215: the data parsing module 12 encapsulates the service information and transmits it to the terminal device 30 through the access module 11.

Step S216: the service is ended.

According to an embodiment of the invention, a computer readable medium is further provided which stores a computer executable instruction. When executed by a computer or a processor, the instruction makes the computer or the processor execute each step in Fig. 7 and Fig. 8, preferably, one or more of the embodiments.

In addition, the invention is easily implemented without modifying the system architecture and the existing processing flow, and convenient to popularize in the technical field and has a strong industrial applicability.

What described above is the further detailed description of the present invention with reference to preferred embodiments and the scope of the invention should not be construed as being limited to the embodiments set forth herein. Various simple deductions or replacements may be made by those skilled in the art within the concept of the present invention and shall fall within the protection scope of the present invention.

## Claims

1. A multi-access customer service system, which comprises an access module, a data parsing module, a customer service module and a service module, wherein
the access module is configured to receive various kinds of request information from a terminal device, and to transmit the request information to the data parsing module;
the data parsing module is configured to parse and identify the request information, and transmit the parsed request information to the service module or the customer service module;
the service module is configured to generate corresponding service information by executing service logic, and transmit the service information to the terminal device; and
the customer service module is configured to connect a customer service agent to make the customer service agent exchange information with the terminal device.

2. The multi-access customer service system according to Claim 1, wherein the data parsing module comprises a parsing unit, a classification unit and a transmission unit, wherein the parsing unit is configured to parse the request information, and to transmit the parsed request information to the classification unit; the classification unit is configured to classify and identify the request information; and the transmission unit is configured to transmit the request information to the service module for processing if execution of service logic is needed, otherwise, to transmit the request information to the customer service module for processing.

3. The multi-access customer service system according to Claim 1, wherein the access module comprises a receiving unit, a queue processing unit and a transmission unit, wherein the receiving unit is configured to receive the request information from the terminal device, and to input the request information into the queue processing unit;
the queue processing unit is configured to array and buffer the request information; and
the transmission unit is configured to transmit the request information in the queue processing unit to the data parsing module.

4. The multi-access customer service system according to Claim 3, wherein the access module further comprises a policy configuration unit which is configured to provide the queue processing unit with at least one array policy of a load balancing policy, a priority policy and a format selecting policy.

5. The multi-access customer service system according to any one of Claims 1 to 4, wherein the access module further comprises a data transmission module, and the process of the service information is transmitted to the terminal device comprises: the service module sends the generated service information to the data transmission module; and the data transmission module encapsulates the service information, and transmits the encapsulated service information to the terminal device.

6. The multi-access customer service system according to Claim 1 or 2, wherein the data parsing module is further configured to encapsulate the service information from the service module, and transmit the encapsulated service information to the access module; and the access module is further configured to transmit the service information to the terminal device.

7. The multi-access customer service system according to Claim 6, wherein the access module comprises a receiving unit, a queue processing unit and a transmission unit, wherein, the receiving unit is configured to receive the request information from the terminal device and the service information from the data parsing module, and input the request information and the service information into the queue processing unit respectively;
the queue processing unit is configured to array and buffer the request information and the service information; and
the transmission unit is configured to transmit the request information to the data parsing module, and transmit the service information in the queue processing unit to the terminal device.

8. The multi-access customer service system according to any one of Claims 1 to 4, wherein the service module is further configured to provide the terminal device with a navigation menu according to the request information.

9. The multi-access customer service system according to any one of Claims 1 to 4, the service module is further configured to receive the request information from the customer service module, to generate the service information by executing service logic and to transmit the service information to the terminal device.

10. The multi-access customer service system according to any one of Claims 1 to 4, the request information is at least one of calling information, multimedia message, short message, voice, video, audio, E-mail, WAP and USSD.

11. A multi-access customer service method, comprising:
A: receiving various kinds of request information from a terminal device;
B: parsing and identifying the request information; and
C: if the request information requires execution of service logic, generating corresponding service information by executing service logic and transmitting the service information to a terminal device; otherwise, connecting a customer service agent to make the customer service agent exchanges information with the terminal device.

12. The multi-access customer service method according to Claim 11, wherein, in the process of information exchange between the customer service agent and the terminal device, the customer service system executes service logic to generate corresponding service information according to the request information of the terminal device, and transmits the service information to the terminal device.
